# EUROPÄISCHE PATENTSCHRIFT

(11) **EP 0 635 135 B1**
(45) Veröffentlichungstag und Bekanntmachung des Hinweises auf die Patenterteilung: **30.10.1996**
(21) Anmeldenummer: 93905202.3
(22) Anmeldetag: 18.03.1993
(51) Int. Cl.: G01P 21/02

(54) **VERFAHREN ZUR ÜBERWACHUNG VON DREHZAHLFÜHLERN**
METHOD OF MONITORING RPM SENSORS
PROCEDE POUR LA SURVEILLANCE DE DETECTEURS DE VITESSE

(30) Priorität: 07.04.1992 DE 4211622
(43) Veröffentlichungstag der Anmeldung: 25.01.1995
(73) Patentinhaber: ROBERT BOSCH GMBH, 70442 Stuttgart (DE)
(72) Erfinder: SCHLICHENMAIER, Andreas, D-7129 Zaberfeld-Leonbronn (DE); HÄFELE, Ulrich, D-7057 Leutenbach (DE); SCHWABE, Ulrich, D-7257 Ditzingen (DE); DITTMAR, Christian, D-7015 Korntal-Münchingen (DE); BLANC, Martin, D-7134 Knittlingen/Klein villars (DE); PURAT, Thomas, D-7144 Asperg (DE)
(86) Internationale Anmeldenummer: DE9300249
(87) Internationale Veröffentlichungsnummer: WO9320452

(56) Entgegenhaltungen:
- WO-A-91/11757
- FR-A- 2 590 677

## Beschreibung

### Stand der Technik

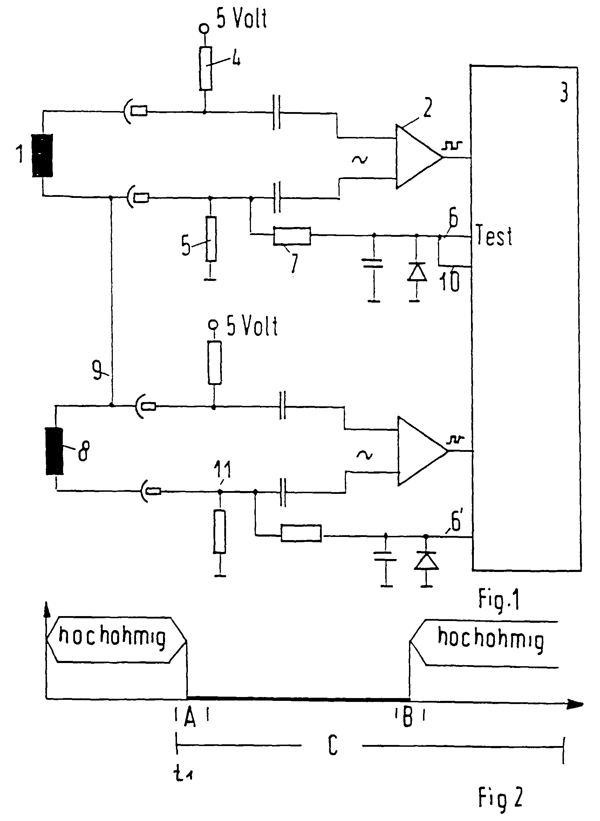

Es gibt allgemein bekannte Fehlererkennungsschaltungen für induktive Drehzahlfühler, die durch Überwachung eines Spannungspegels, der durch eine überlagerte Gleichspannung ausgelöst wird, einen defekten Drehzahlfühler und zwar einen Leitungsbruch und einen Kurzschluß gegen die Versorgungsleitung erkennen können. Eine solche Schaltung zeigt Figur 1 der Zeichnung in ihrer oberen oder unteren Hälfte.

Ein Drehzahlfühler ist mit 1, ein die Sinusspannung in eine Rechteckspannung umwandelnder Verstärker mit 2 bezeichnet. Der Ausgang des Verstärkers 2 ist mit einem µ -Prozessor 3 verbunden. Zur Überwachung ist der Drehzahlfühler 1 in einen Spannungsteiler mit zwei zusätzlichen Widerständen 4 und 5 eingeschaltet. Über eine Leitung 6 mit einem Widerstand 7 überwacht µ -Prozessor den Spannungspegel am Verbindungspunkt des Drehzahlfühlers 1 und des Widerstandes 7. Bei Leitungsbruch oder einem Kurzschluß gegen die Versorgungsleitung ändert sich der Spannungspegel an dem Zusammenschaltpunkt. Dies erkennt der µ -Prozessor und warnt und/oder schaltet das System (z.B. ein ABS) ab.

Die untere Hälfte der Figur 1 zeigt eine identische zweite Überwachungsschaltung für einen Drehzahlfühler 8. Die bekannte Schaltung kann einen Kurzschluß zwischen den Drehzahlfühlern bzw. deren Zuleitungen, wie er in Figur 1 durch die Leitung 9 angedeutet ist, nicht erkennen.

### Figurenbeschreibung

Gemäß der Erfindung wird von Zeit zu Zeit über eine Test leitung 10 durch den µ -Prozessor 3 der Spannungspegel am Zusammenschaltpunkt von Drehzahlfühler 1 und Widerstand 7 gewollt verändert. Liegt ein Kurzschluß vor, so wird sich auch der Pegel am Zusammenschaltpunkt 11 der unteren Schaltung ändern und der µ -Prozessor 3 erkennt dies ähnlich einem Abriß über die Leitung 6'. Während des Tests muß die Überwachung über die Leitung 6 der oberen Schaltung unterdrückt werden.

Figur 2 zeigt ein Diagramm betreffend den Testverlauf. Bis t₁ ist der Zusammenschaltpunkt zwischen Drehzahlfühler 1 und Widerstand 7 auf hohem Potential. Dann wird der Pegel über die Leitung 10 auf 0 gebracht. In den Übergangsbereichen A und B wird dabei zur Vermeidung von Fehlern die Geschwindigkeitsmessung gesperrt. Außerdem wird in der Phase C die Brucherkennung gesperrt. Während des Testimpulses von z.B. 300 ms Dauer erkennt der µ -Prozessor über Leitung 6' - ein Kurzschluß vorausgesetzt - durch eine Pegeländerung diesen Kurzschluß.

## Patentansprüche

1. Verfahren zur Überwachung von zwei oder mehreren induktiven Drehzahlfühlern, bei dem dem auszuwertenden Wechselspannungssignal jeweils ein Gleichspannungssignal überlagert ist, wobei ein Fehler durch Überwachung eines durch die Überlagerung bedingten Spannungspegels an einem Überwachungspunkt erkannt wird, dadurch gekennzeichnet, daß zur Überwachung von Kurzschlüssen zwischen wenigstens zwei Drehzahlfühlern bzw, deren Zuleitungen vor Zeit zu Zeit in einer Testphase von außen her einem Pol eines Drehzahlfühlers ein den Pegel ändernder Testimpuls zugeführt wird und daß am Überwachungspunkt wenigstens eines weiteren Drehzahlfühlers überwacht wird, ob sich hierdurch eine Änderung des Spannungspegels ergibt.

## Claims

1. Method of monitoring two or more inductive r.p.m. sensors, in which method in each case a direct voltage signal is superimposed on the oscillating voltage signal to be evaluated, a fault being detected by monitoring, at a monitoring point, a voltage level conditioned by the superimposition, characterized in that, in order to monitor short-circuits between at least two r.p.m. sensors and/or between their feedlines, from time to time a test pulse which changes the level is fed from the outside to one pole of an r.p.m. sensor in a test phase, and in that it is monitored at the monitoring point of at least one further r.p.m. sensor whether as a result a change in the voltage level is produced.

## Revendications

1. Procédé de surveillance de deux ou plusieurs capteurs inductifs de vitesse de rotation, selon lequel on combine un signal de tension continue au signal de tension alternatif à exploiter, un défaut étant reconnu par la surveillance, au point de jonction, du niveau de tension obtenu par superposition,
caractérisé en ce que
pour surveiller des courts-circuits entre au moins deux capteurs de vitesse de rotation ou leurs lignes d'alimentation, on applique de temps à autre au cours d'un essai (test), de l'extérieur, à un pôle du capteur de vitesse de rotation, une impulsion d'essai modifiant son niveau et, au point de surveillance, on surveille au moins un autre capteur de vitesse de rotation pour déterminer s'il en résulte une variation du niveau de tension.
